# EUROPÄISCHE PATENTSCHRIFT

(11) **EP 1 148 286 B1**
(45) Veröffentlichungstag und Bekanntmachung des Hinweises auf die Patenterteilung: **22.09.2004**
(21) Anmeldenummer: 01108361.5
(22) Anmeldetag: 03.04.2001
(51) Int. Cl.: F16L 37/40, F16L 37/30

(54) **Kupplung zweier Fluid-Leitungen mit einem Kugelhahn**
Coupling with two fluid pipes having a ball valve
Raccord pour deux tuyaux ayant un robinet à boisseau sphérique

(30) Priorität: 20.04.2000 DE 10019526
(43) Veröffentlichungstag der Anmeldung: 24.10.2001
(73) Patentinhaber: Bayerische Motoren Werke Aktiengesellschaft, 80809 München (DE)
(72) Erfinder: Meyer, Olaf, 80637 München (DE)

(56) Entgegenhaltungen:
- US-A- 2 373 925
- US-A- 2 458 910
- US-A- 5 286 129

## Beschreibung

Die Erfindung betrifft eine Kupplung zweier Fluid-Leitungen mit einem die beiden Leitungsenden absperrenden oder freigebenden Kugelhahn. Zum technischen Umfeld wird neben der DE 36 02 775 A1 insbesondere auf die US 5,286,129 A verwiesen.

Beispielsweise für das Betanken von Kraftfahrzeugen mit flüssigem Erdgas wird eine einfach kuppelbare und dabei nach außen hin möglichst dichte Leitungsverbindung zweier Fluid-Leitungen benötigt, wobei aber auch im getrennten Zustand bzw. bereits beim Lösen dieser Kupplung oder Leitungsverbindung die Leitungsenden der beiden Fluid-Leitungen bestmöglich abgesperrt, d.h. abgedichtet sein sollen. Die in der oben erstgenannten Schrift gezeigte Kupplung zur Verbindung eines feststehenden Rohres oder dgl. mit einem beweglichen Rohr oder Schlauch wird diesen Anforderungen zwar gerecht, jedoch baut diese bekannte Kupplung relativ aufwendig und großvolumig, was u.a. auch dadurch bedingt ist, daß in jeder der miteinander zu verbindenden Fluid-Leitungen ein eigenständiger Kugelhahn vorgesehen ist. Eine demgegenüber einfachere Kupplung zweier Fluid-Leitungen mit einem die beiden Leitungsenden absperrenden oder freigebenden Kugelhahn ist in der eingangs zweitgenannten US 5,286,129 A gezeigt. Dabei besteht der (im gekuppelten Zustand einzige) Kugelhahn aus zwei im wesentlichen halbkugelförmigen Hahnhälften, von denen eine der ersten Fluidleitung und die andere der zweiten Fluidleitung zugeordnet ist und mit denen jeweils die zugeordnete Fluidleitung absperrbar ist, wobei sich bei aneinander angrenzenden Stirnflächen der Fluid-Leitungen die beiden Hahnhälften zum im wesentlichen kugelförmigen Kugelhahn ergänzen, der nach Verdrehen sowohl einen Fluid-Übertritt durch die beiden Leitungsenden freigibt als auch die beiden Fluid-Leitungen in dieser Hahnposition untrennbar miteinander verbindet.

Üblicherweise wird ein Kugelhahn durch eine sog. Voll-Kugel gebildet, d.h. durch einen im wesentlichen kugelförmigen Körper, der mit einer zentral verlaufenden Durchtrittsöffnung, im folgenden auch Kugelhahn-Kanal genannt, versehen ist. Diese Vollkugel liegt dabei mit einem Durchmesserkreis an der Innenwand der im Querschnitt kreisförmigen Fluidleitung an und kann ausgehend von einer Position, in der der Kugelhahn-Kanal parallel zur Längsachse der Fluid-Leitung ausgerichtet ist, zumeist um 90° in eine Position verdreht werden, in der dann der Kugelhahn-Kanal senkrecht zur Längsachse der Fluid-Leitung verläuft. In der erstgenannten Position gibt der Kugelhahn die Fluid-Leitung bzw. deren Leitungsende oder genauer einen Fluid-Übertritt über deren Leitungsende frei, während der Kugelhahn in der zweitgenannten Position das Leitungsende absperrt.

Bei dem in der US 5,286,129 A gezeigten Kugelhahn wird nun eine einzige sog. Voll-Kugel in zwei sog. Hahnhälften unterteilt, die jeweils im wesentlichen eine Halb-Kugel bilden und jeweils einer der miteinander zu verbindenden (oder voneinander trennbaren) Fluid-Leitungen zugeordnet sind. Jede dieser Halb-Kugeln oder Hahnhälften kann dann die zugeordnete Fluid-Leitung absperren. Sind hingegen die beiden Fluid-Leitungen bzw. deren Leitungsenden aneinander gekuppelt, so sind gleichzeitig die beiden Hahnhälften zu einem einzigen, eine Voll-Kugel bildenden Kugelhahn zusammengesetzt, der dann geöffnet werden kann, so daß ein Fluid-Übertritt von der einen Fluid-Leitung in die andere Fluid-Leitung möglich ist.

Mit der vorliegenden Erfindung soll nun an einem derartigen Kugelhahn nach dem Oberbegriff des Patentanspruchs 1 eine vorteilhafte Weiterbildung aufgezeigt werden.

Zur Lösung dieser Aufgabe übernimmt dieser Kugelhahn erfindungsgemäß noch eine weitere, nämlich eine Kupplungsfunktion, indem in der die Leitungsenden freigebenden Position des aus den beiden Hahnhälften zusammengesetzten Kugelhahnes die beiden Fluid-Leitungen durch diesen Kugelhahn auf geeignete Weise mechanisch untrennbar miteinander verbunden und somit aneinander gekuppelt sind bzw. werden. Im Sinne einer sicheren Ausgestaltung erfolgt dieses Aneinander-Kuppeln mittels zweier Klauen, die auf der Kugeloberfläche einer Hahnhälfte einander diametral gegenüberliegend angeordnet sind, sowie zweier entsprechend auf der anderen Hahnhälfte vorgesehener Stege, wobei die Stege in die zugehörigen Klauen einführbar sind und jede Hahnhälfte in der Wand der zugeordneten Fluidleitung über die Klauen oder über die Stege verdrehbar geführt ist. Dies sowie weitere ggf. erfindungswesentliche Merkmale geht auch aus der folgenden Beschreibung eines bevorzugten Ausführungsbeispieles hervor.

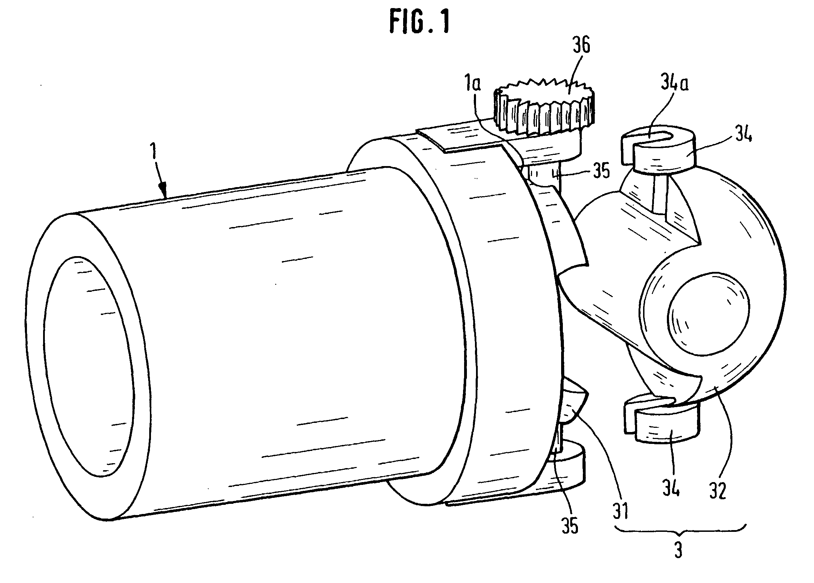

In den beigefügten **Figuren 1 - 3** ist eine erfindungsgemäße Kupplung stark abstrahiert und auf das wesentliche beschränkt perspektivisch dargestellt. Dabei zeigt **Figur 1** nur eine Fluidleitung sowie die beiden Hahnhälften, des Kugelhahnes, während in **Figur 2** auch die zweite Fluid-Leitung dargestellt ist. **Figur 3** schließlich zeigt die miteinander verbundenen bzw. gekuppelten Fluidleitungen.

Mit der Bezugsziffer 1 ist die erste rohrförmige und dabei einen Kreisquerschnitt aufweisende Fluid-Leitung bezeichnet, an deren Leitungsende 1a oder Stirnfläche 1a eine zweite ebenfalls einen Kreisquerschnitt aufweisende Fluid-Leitung 2 mit deren Leitungsende 2a bzw. deren Stirnfläche 2a angekuppelt werden soll. Dabei sollen insbesondere auch bei einer Trennung dieser beiden Fluid-Leitungen 1, 2 voneinander die einzelnen Leitungsenden 1a, 2a absperrbar sein. Vorgesehen ist hierfür quasi ein einziger in seiner Gesamtheit mit der Bezugsziffer 3 bezeichneter Kugelhahn, der im wesentlichen aus zwei im wesentlichen jeweils halbkugelförmigen Hahnhälften 31, 32 besteht, die von einander separierbar oder zum Kugelhahn 3 zusammensetzbar sind. Dabei ist die Hahnhälfte 31 der ersten Fluid-Leitung 1 und die zweite Hahnhälfte 32 der zweiten Fluid-Leitung 2 zugeordnet.

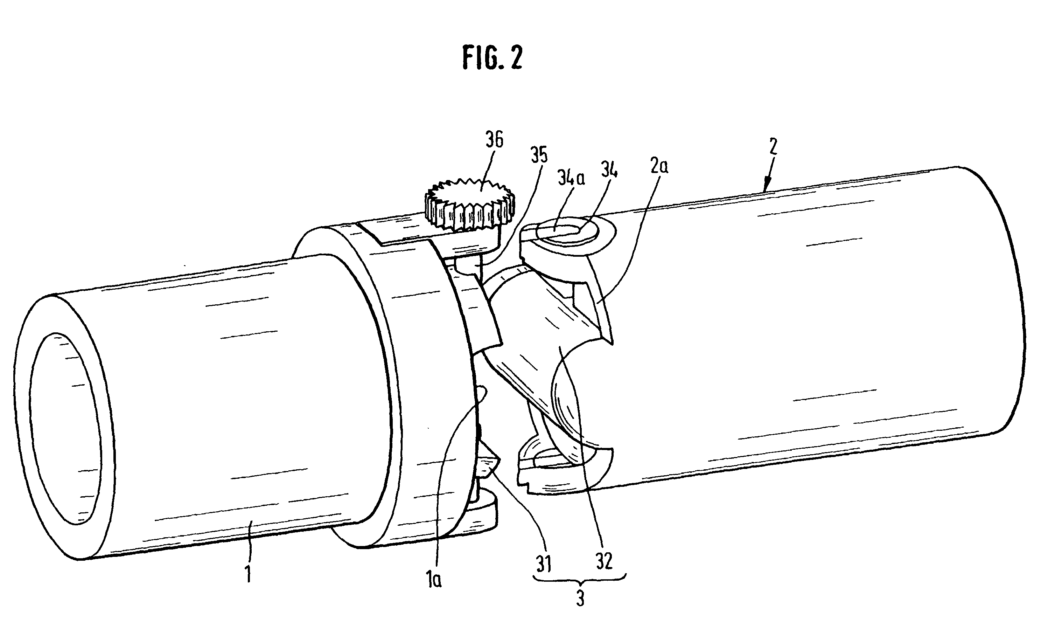

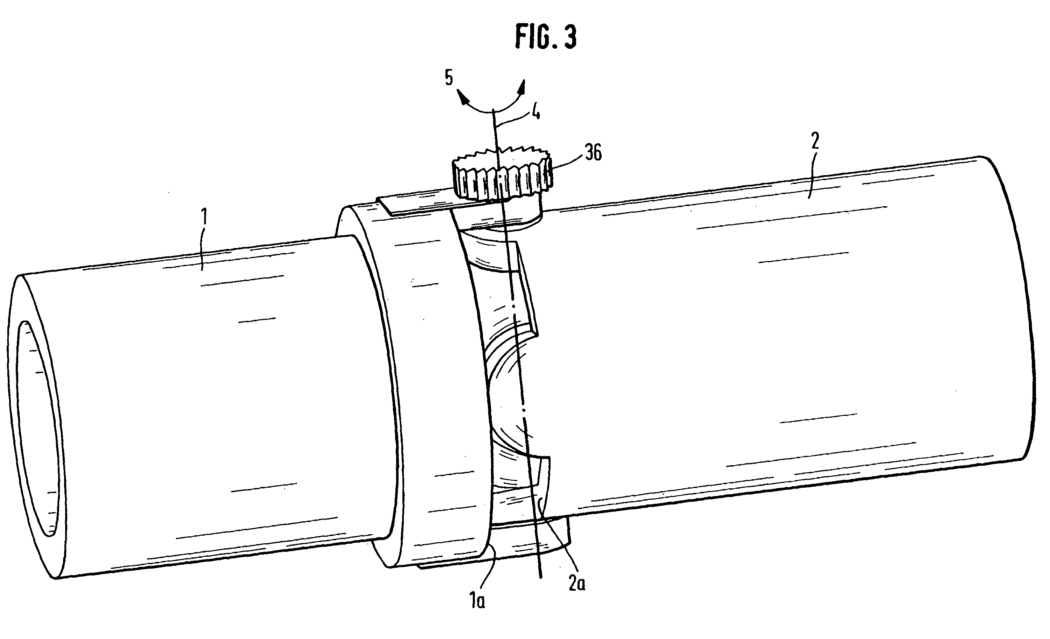

Wie insbesondere **Figur 2** zeigt, hat die Hahnhälfte 32 nicht exakt die Form einer Halbkugel, sondern weist einen von der ebenen Seite dieser Halbkugel abstehenden Vorsprung oder dgl. auf, der hier in Form eines längs seiner Achse halbierten Zylinders ausgebildet ist. Längs dieser Zylinder-Achse und somit sowohl durch den Vorsprung als auch quer durch die Halbkugel hindurch verläuft ein sog. Kugelhahn-Kanal 33. Befindet sich dieser Kugelhahn-Kanal 33 bzw. die Hahnhälfte 32 im zusammengebauten Zustand gemäß **Figur 3** in der in **Figur 2** dargestellten Position, so ist offensichtlich kein Fluid-Übertritt zwischen den beiden Fluid-Leitungen 1, 2 möglich, so daß dann die Leitungsenden 1 a, 2a abgesperrt sind. Wird hingegen die Hahnhälfte 32 um die später noch weiter erläuterte Drehachse 4 des Kugelhahnes 3 gemäß Pfeilrichtung 5 um 90° verdreht, so liegt der Kugelhahn-Kanal 33 in Richtung der (nicht explizit dargestellten) Längsachsen der aneinander gekuppelten Fluid-Leitungen 1, 2, so daß dann ein Fluid-Übertritt durch den Kugelhahn 3 hindurch möglich ist, d.h. daß dann die Leitungsenden 1a, 2a der Fluid-Leitungen 1, 2 freigegeben sind.

Letzteres geht besonders deutlich aus **Figur 2** hervor, da hier die Hahnhälfte 32 im in der zugeordneten Fluid-Leitung 2 eingebauten (und dabei deren Leitungsende 2a absperrenden) Zustand dargestellt ist. Ebenso erkennt man in dieser Darstellung die in die zugeordnete Fluid-Leitung 1 eingebaute Hahnhälfte 31. Bei letzterer handelt es sich ebenfalls nicht um eine exakte Halbkugel, jedoch ist diese Hahnhälfte 31 ebenso wie die Hahnhälfte 32 derart in der jeweiligen Fluid-Leitung 1 bzw. 2 eingebaut, daß sie mit ihrer kugelförmigen, gewölbten Oberfläche in die Fluid-Leitung 1 bzw. 2 hineinragt, d.h. die sog. Schnittfläche jeder Halbkugel ist dem jeweiligen Leitungsende 1a bzw. 2a zugewandt. Dabei ist die sog. Schnittfläche der im wesentlichen halbkugelförmigen Hahnhälfte 31 selbstverständlich derart ausgebildet, daß sie mit der anderen Hahnhälfte 32 zu einer Voll-Kugel ergänzt werden kann, d.h. auf der Schnittfläche der Hahnhälfte 31 ist eine geeignet gestaltete Aussparung oder Vertiefung vorgesehen, in welche sich der sog. Vorsprung auf der Schnittfläche der Hahnhälfte 32 einfügen kann, wenn die beiden Fluid-Leitungen 1, 2 mit den eingebauten Hahnhälften 31, 32 derart zusammengesetzt werden, daß die Stirnflächen 1a, 2a aneinander angrenzen, wie dies in **Figur 3** dargestellt ist.

Zurückkommend auf **Figur 2** erkennt man zwei auf der Hahnhälfte 32 im Bereich der genannten Schnittfläche einander diametral gegenüberliegend angeordnete sog. Klauen 34, die in dieser Position der Hahnhälfte 32 nach vorne hin offen sind, d.h. sog Einführöffnungen 34a der Klauen 34 liegen in Richtung der gemeinsamen Längsachse der miteinander zu verbindenden Fluid-Leitungen 1, 2. Auf der anderen Hahnhälfte 31 sind mit diesen Klauen 34 korrespondierende und dementsprechend ebenfalls einander diametral gegenüberliegende Stege 35 vorgesehen. Sollen nun die beiden Fluid-Leitungen 1, 2 zusammengefügt, d.h. miteinander gekuppelt werden, so werden die Stege 35 der Hahnhälfte 31 in die wie figürlich dargestellt ausgerichteten Klauen 34 der Hahnhälfte 32 eingeführt. Damit kommen die beiden Hahnhälften 31, 32 mit ihren sog. Schnittflächen aneinander zum Anliegen. Gleichzeitig kommen die beiden Fluidleitungen 1, 2 mit ihren entsprechend bzw. geeignet gestalteten Stirnflächen 1a, 2a aneinander zum Anliegen.

Der zuletzt beschriebene Zustand ist in **Figur 3** dargestellt. Wie hieraus, aber auch aus **Figur 2** klar ersichtlich ist, ist jede Hahnhälfte 31, 32 in der Wand der zugeordneten Fluid-Leitung 1 bzw. 2 geführt bzw. gelagert. Diese Lagerung ist drehbar gestaltet, derart, daß im zusammengebauten Zustand nach **Figur 3** die Stege 35 zusammen mit den Klauen 34 eine bzw. die bereits genannte Drehachse 4 für den dann zusammengebauten Kugelhahn 3 bilden. Somit kann nun der Kugelhahn 3 um diese Drehachse 4 um 90° verdreht werden, wonach der Kugelhahn-Kanal 33 in Richtung der gemeinsamen Längsachse der Fluid-Leitungen 1, 2 verläuft und die zuvor noch abgesperrten Leitungsenden 1a, 2a freigegeben werden, so daß nunmehr ein Fluid-Übertritt zwischen den beiden Fluid-Leitungen 1, 2 durch den geöffneten Kugelhahn 3 möglich ist.

Wie ersichtlich ist, sind nach der besagten Verdrehbewegung des Kugelhahnes 3 im Öffnungssinne die Einführöffnungen 34a der Klauen 34 quer zur gemeinsamen Längsachse der Fluid-Leitungen 1, 2 ausgerichtet, so daß in diesem gekuppelten und geöffneten Zustand die Fluid-Leitungen 1, 2 nicht voneinander getrennt werden können, d.h. in diesem Zustand kann die durch den Kugelhahn 3 gebildete Kupplung nicht geöffnet werden. Dies ist erst dann möglich, wenn zuvor der Kugelhahn 3 in seiner Gesamtheit und somit auch die beiden Hahnhälften 31, 32 in eine die Fluid-Leitungen 1, 2 bzw. deren Leitungsenden 1a, 2a absperrende Position gemäß **Figur 2** gebracht wurde(n).

Hier ist am freien Ende der Stege 35 jeweils ein Rändelrad 36 zum Betätigen, d.h. Verdrehen des Kugelhahnes 3 vorgesehen, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. Stets erhält man eine einfach und sicher zu bedienende Kupplung für zwei Fluid-Leitungen 1, 2, die gewährleistet, daß eine Trennung dieser Fluid-Leitungen 1, 2 nur dann möglich ist, wenn diese jeweils für sich abgesperrt sind, und zwar mittels einer Hahnhälfte 31 bzw. 32 des in sich trennbaren Kugelhahnes 3. Dabei zeichnet sich diese erfindungsgemäße Kupplung durch einen einfachen Aufbau sowie geringen Raumbedarf aus, da lediglich ein einziger durch eine Voll-Kugel gebildeter Kugelhahn 3 vorhanden ist.

### Bezugszeichenliste:

- 1,2: Fluid-Leitung
- 1a: Leitungsende oder Stirnfläche der ersten Fluid-Leitung 1
- 2a: Leitungsende oder Stirnfläche der zweiten Fluid-Leitung 2
- 3: Kugelhahn
- 31: Hahnhälfte, der Fluid-Leitung 1 zugeordnet
- 32: Hahnhälfte, der Fluid-Leitung 1 zugeordnet
- 33: Kugelhahn-Kanal
- 34: Klaue
- 34a: Einführöffnung von 34
- 35: Steg
- 36: Rändelrad
- 4: Drehachse
- 5: Pfeilrichtung: Verdrehen von 3

## Patentansprüche

1. Kupplung zweier Fluid-Leitungen (1, 2) mit einem die beiden Leitungsenden (1a, 2a) absperrenden oder freigebenden Kugelhahn (3), der aus zwei im wesentlichen halbkugelförmigen Hahnhälften (31, 32) besteht, von denen eine der ersten Fluid-Leitung (1) und die andere der zweiten Fluid-Leitung (2) zugeordnet ist und mit denen jeweils die zugeordnete Fluidleitung absperrbar ist, und wobei sich bei aneinander angrenzenden Stirnflächen (1a, 2a) der Fluid-Leitungen (1, 2) die beiden Hahnhälften (31, 32) zum im wesentlichen kugelförmigen Kugelhahn (3) ergänzen, der nach Verdrehen sowohl einen Fluid-Übertritt durch die beiden Leitungsenden (1a, 2a) freigibt als auch die beiden Fluid-Leitungen (1, 2) in dieser Hahnposition untrennbar miteinander verbindet,
**dadurch gekennzeichnet, dass** eine Hahnhälfte (32) mit zwei auf der Kugeloberfläche diametral angeordneten Klauen (34) versehen ist, in die diametral angeordnete Stege (35) der anderen Hahnhälfte (31) einführbar sind und dass jede Hahnhälfte (31, 32) in der Wand der zugeordneten Fluid-Leitung (1, 2) über die Klauen (34) oder über die Stege (35) verdrehbar geführt ist.

## Claims

1. Coupling between two fluid lines (1, 2) comprising a ball valve (3) shutting off or opening the two line ends (1a, 2a) and consisting of two substantially hemispherical valve halves (31, 32), of which one is associated with the first fluid line (1) and the other with the second fluid line (2) and with which the respective associated fluid line can be shut off, and wherein in adjoining end faces (1a, 2a) of the fluid lines (1, 2), the two valve halves (31, 32) make up the substantially spherical ball valve (3) which, after rotation, opens a fluid passage through the two line ends (1a, 2a) as well as inseparably connecting the two fluid lines (1, 2) to one another in this valve position, **characterised in that** one valve half (32) is provided with two claws (34) diametrically arranged on the spherical surface, into which claws diametrically arranged webs (35) of the other valve half (31) can be inserted and **in that** each valve half (31, 32) is rotatably guided in the wall of the associated fluid line (1, 2) via the claws or via the webs (35).

## Revendications

1. Accouplement de deux conduites de fluide (1, 2) à l'aide d'un robinet à boisseau sphérique (3) permettant de bloquer ou de débloquer les deux extrémités de conduite (1a, 2a), et qui se compose de deux moitiés de robinet (31, 32) pour l'essentiel de forme hémisphérique, parmi lesquelles l'une est associée à la première conduite de fluide (1) et l'autre est associée à la deuxième conduite de fluide (2) et avec lesquelles respectivement la conduite de fluide associée peut être bloquée, les deux moitiés de robinet (31, 32) se complétant, lorsque les faces frontales (1a, 2a) des conduites de fluide (1, 2) sont attenantes l'une à l'autre, pour former un robinet à boisseau sphérique (3) pour l'essentiel de forme sphérique, qui après une rotation débloque à la fois un passage de fluide à travers les deux extrémités de conduite (1a, 2a), tout en reliant entre elles de façon inséparable les deux conduites de fluide (1, 2), dans cette position de robinet,
**caractérisé en ce qu'**
une moitié de robinet (32) est pourvue de deux mâchoires d'accouplements (34) disposées diamétralement sur la surface sphérique, dans lesquelles peuvent être insérées des traverses (35) de l'autre moitié de robinet (31) disposées de façon diamétralement opposée, et chacune des moitiés de robinet (31, 32) est introduite de façon rotative dans la paroi de la conduite de fluide (1, 2) associée par le biais des mâchoires d'accouplements (34) ou par le biais des traverses (35).
